# EUROPÄISCHE PATENTSCHRIFT

(11) **EP 2 415 976 B1**
(45) Veröffentlichungstag und Bekanntmachung des Hinweises auf die Patenterteilung: **23.03.2016**
(21) Anmeldenummer: 11401554.8
(22) Anmeldetag: 19.07.2011
(51) Int. Cl.: F01K 25/10, F01K 3/00, F22B 1/00, F28D 20/02

(54) **Wärmekraftmaschine zur Umwandlung von Wärmeenergie in mechanische Energie sowie Verfahren zum Betrieb einer solchen Wärmekraftmaschine**
Thermal engine for converting thermal energy into mechanical energy and method for operating of such a thermal engine
Moteur thermique destiné à transformer de l'énergie thermique en énergie mécanique ainsi que procédé de fonctionnement d'un tel moteur thermique

(30) Priorität: 21.07.2010 DE 102010036530
(43) Veröffentlichungstag der Anmeldung: 08.02.2012
(73) Patentinhaber: Breckling, Marten, 45470 Mülheim an der Ruhr (DE); Nickel, Werner, 04229 Leipzig (DE)
(72) Erfinder: Breckling, Marten, 45470 Mülheim an der Ruhr (DE); Nickel, Werner, 04229 Leipzig (DE)
(74) Vertreter: Sroka, Peter-Christian

(56) Entgegenhaltungen:
- EP-A1- 2 096 305
- WO-A1-2009/017471
- WO-A2-2009/138233
- JP-A- 2006 017 108
- US-A- 1 061 206
- US-A1- 2009 260 361
- Fabio Vandin: "LA TURBINA TESLA NELLE APPLICAZIONI COGENERATIVE DI PICCOLA TAGLIA THE TESLA TURBINE IN SMALL SIZE COGENERATION", , 1 January 2012 (2012-01-01), XP055206668, Padova, Italy Retrieved from the Internet: URL:http://tesi.cab.unipd.it/39623/1/TESI_ LAUREA.pdf [retrieved on 2015-08-06]

## Beschreibung

Die Erfindung betrifft eine Wärmekraftmaschine gemäß dem Oberbegriff des Patentanspruchs 1. Des Weiteren betrifft die Erfindung ein Verfahren gemäß dem Oberbegriff des unabhängigen Patentanspruchs 7.

Eine derartige Wärmekraftmaschine ist beschrieben in der EP 2 096 305. Diese Wärmekraftmaschine zur Umwandlung von Wärmeenergie in einem Expansionsgerät in Form einer Turbine 58 in mechanische Energie zum Antrieb eines Stromgenerators 60 enthält folgende Elemente:
- einen der Turbine 58 vorgeschalteten, als Wärmetauscher ausgebildeten Verdampfer 56 zur Überführung eines Kältemittels aus der Flüssigphase in die Gasphase,
- einen den Verdampfer 56 mit Wärmeenergie versorgenden Latentwärmespeicher 10,
- eine an den Latentwärmespeicher angeschlossene Wärmequelle 6, deren Arbeitsmedium zur Wärmeenergieversorgung des Latentwärmespeichers diesem im Kreislauf zugeführt wird,
- einen der Turbine nachgeschalteten Kondensator 62 zur Verflüssigung des die Turbine verlassenden Kältemittels, und
- eine zwischen dem Kondensator und dem Verdampfer befindliche Pumpe 64 zur Förderung des den Kondensator verlassenden flüssigen Kältemittels in dem Verdampfer.

In der US 2 009 260 361 ist eine dampfbetriebene Wärmekraftmaschine beschrieben, bei der eine mittels Dampf angetriebene, grundsätzlich in der US 1 061 206 beschriebene Tesla-Turbine 142 einen Stromgenerator 148 antreibt. Gemäß Figur 2 wird in einem Dampferzeuger 140 Dampf erzeugt, der durch einen Gegenstrom-Wärmetauscher 141 strömt und darin überhitzt wird. Aus diesem Gegenstrom-Wärmetauscher strömt der überhitzte Dampf durch eine als isothermisches Expansionsgerät bezeichnete Tesla-Turbine 142, die den Stromgenerator 148 antreibt. Nach Verlassen der Tesla-Turbine 142 strömt der Dampf zurück durch den Gegenstrom-Wärmetauscher 141, wodurch die Dampftemperatur abnimmt, indem er Wärme zur Überhitzung des von dem Dampferzeuger kommenden Dampfes abgibt. Die Wärmeenergie des Dampfes ist anschließend noch ausreichend hoch, um das dem Dampferzeuger 140 zugeführte Speisewasser in dem Gegenstrom-Wärmetauscher 143 vorzuerwärmen. Hinter dem Vorerhitzer 143 wird der Dampf in dem Kondensator 144 wieder verflüssigt, aus dem es mittels einer Pumpe 146 durch den Gegenstrom-Wärmetauscher 143 in den Dampferzeuger 140 einströmt. Der Tesla-Turbine 142 ist ein Erhitzer 147 zugeschaltet, um Wärme an den in der Tesla-Turbine expandierenden Dampf zu übertragen. Bei diesem bekannte System ist der Wärmeenergieeinsatz zum Betrieb der Tesla-Turbine mit überhitztem Dampf außerordentlich hoch, so dass diese Wärmekraftmaschine nur mit sehr hohen Arbeitstemperaturen einigermaßen effizient betrieben werden kann.

Die DE 10 2008 023 793 B4 beschreibt Wärmekraftmaschinen, die auch bei niedrigen Temperaturen mit einem hinnehmbaren Wirkungsgrad arbeiten sollen. Zu diesen Entwicklungen zählt auch der "Organic Ranking Cycle" (ORC), bei dem organische Verbindungen als Arbeitsstoff genutzt werden, deren Verdampfungstemperaturen und Dampfdrücke einen Betrieb bei niedrigen Temperaturen zulassen. Mit ORC-Anlagen kann auch regenerierbare Energie, wie z.B. Erdwärme aus geothermischen Quellen, in Arbeit umgesetzt werden. Ebenfalls kann allgemein Energie aus Flüssigkeiten und Gasen zurückgewonnen werden, die über regenerative Energiequellen auf ein niedriges Temperaturniveau aufgeheizt werden. Vor allem soll ein Teil der Wärme, welche bisher wegen des niedrigen Temperaturniveaus nicht wirtschaftlich genutzt werden kann, mittels dieser Wärmekraftmaschine in Strom oder Arbeit umgesetzt werden.

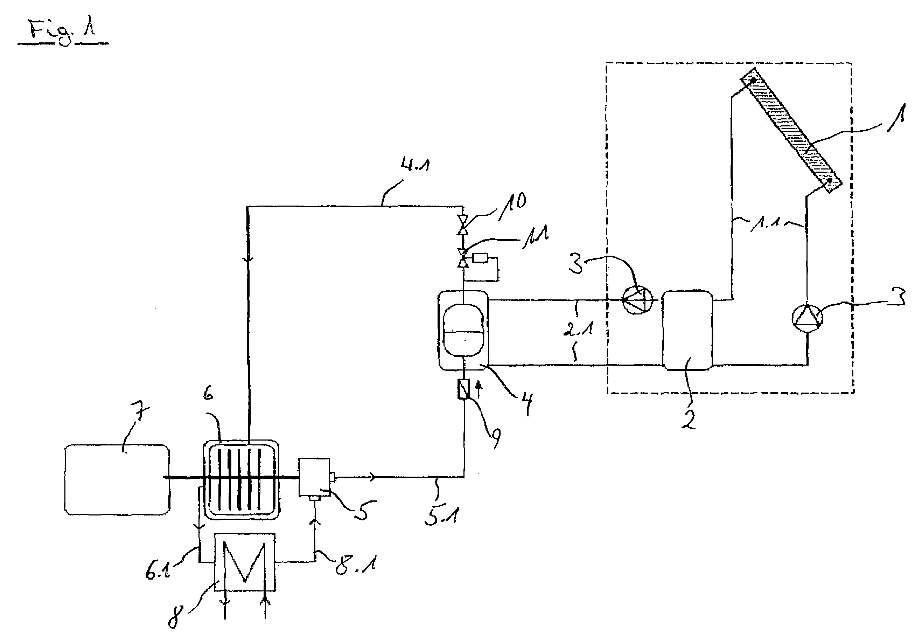

Als den Stromgenerator antreibender Arbeitsmotor wird ein Kolben-Zylinder-Motor oder ein Drehkolbenmotor verwendet. Als Arbeitsmittel wird das Kältemittel R134a (C₂H₂F₄) benutzt und auf Seite 7, insbesondere unter Bezugnahme auf Figur 9, hinsichtlich der Verdampfung und Kondensation beschrieben. Infolge der Verwendung von Kolben-Arbeitsmotoren ist insbesondere unter Ausnutzung regenerativer Energie mit einem relativ geringen Wirkungsgrad zu rechnen, wobei tages- oder jahreszeitliche Schwankungen hinsichtlich der solar oder thermisch verfügbaren Wärme keinen gleichmäßigen Betrieb des Arbeitsmotors gewährleisten.

In der WO 2007/056985 ist ein Verfahren zum Betrieb einer Wärmekraftmaschine beschrieben, bei dem mittels thermisch nutzbarer Solarzellen bzw. Solarkollektoren ein Wärmeträgerfluid verdampft wird, das zur Gewinnung elektrischer Energie eine mit einem Generator verbundene, nicht näher spezifizierte Turbine antreibt, wobei die Kondensation des Wärmeträgerfluids durch offene Verdunstung von Wasser erfolgt. Als Wärmeträgerfluid, welches gleichzeitig als Kühlmedium für photovoltaische Solarzellen benutzt wird, sind, wenn es weder Wasser noch wasserähnlich ist, beispielsweise Monopropylenglykol oder Tripropylenglykol genannt, die in einem geschlossenen Behälter oder im Kreislauf geführt werden. Da in Abhängigkeit von der über die Zeit veränderlichen Sonneneinstrahlung eine veränderliche Erwärmung des Wärmeträgerfluids stattfindet, muss in Frage gestellt werden, ob der Wärmeinhalt des Wärmeträgerfluids insbesondere zum gleichmäßigen Betrieb der den Generator antreibenden Turbine ausreicht, abgesehen davon, dass diese Druckschrift auch keinen Hinweis auf die zu verwendende Turbine enthält.

In der AT 506 6796 B1 sind eine Wärmekraftmaschine sowie ein Verfahren zum Betreiben einer solchen Wärmekraftmaschine beschrieben. Bei diesem Verfahren wird ein organisches Arbeitsmittel im Kreislauf nach einem im Wesentlichen auf einem höheren Druckniveau stattfindenden, isobaren Verdampfungsprozess auf ein niedriges Druckniveau entspannt und wieder kondensiert. Um vorteilhafte Arbeitsbedingungen zu schaffen, wird vorgeschlagen, dass mit Hilfe einer Flüssigkeit, die durch den gespannten Dampf des Arbeitsmittels in wenigstens einem Druckbehälter unter Druck gesetzt wird, eine in einem Zwischenbehälter angeordnete, nicht näher spezifizierte Flüssigkeitsturbine beaufschlagt wird. Nach Beaufschlagung der Flüssigkeitsturbine mit der Flüssigkeit aus dem Druckbehälter wird der Druckbehälter mit dem Zwischenbehälter zur Entspannung des Dampfes verbunden und die im Zwischenbehälter gesammelte Flüssigkeit wird über eine Rückleitung in den Druckbehälter zurückgeführt wird, bevor der entspannte Dampf des Arbeitsmittels kondensiert und zur neuerlichen Beaufschlagung des Druckbehälters wieder verdampft wird.

Gemäß dieser Druckschrift wird, um auch bei kleinen Temperaturgefällen zwischen Wärmequelle bzw. Wärmebad einerseits und Wärmesenke bzw. Kältebad andererseits Dampfturbinen betreiben zu können, als bekannt unterstellt, organische Arbeitsmittel einzusetzen, um Wärme mit niedrigem Temperaturniveau zum Antrieb von Stromgeneratoren in mechanische Arbeit umzuwandeln, wobei die in üblicher Weise eingesetzten Dampfturbinen die Anforderungen nach einer möglichst kostengünstigen Ausbeute der mechanischen Arbeit aus Wärme nicht erfüllen.

Für den Betrieb dieser Wärmekraftmaschine wird wenigstens ein Arbeitsmittelkreislauf benutzt, der einen Verdampfer, eine Entspannungseinrichtung und einen Kondensator enthält, wobei der Verdampfer einen eine Flüssigkeit aufnehmenden Druckbehälter mit einer Tauchleitung umfasst, die eine Beaufschlagungsleitung für eine Flüssigkeitsturbine innerhalb eines Zwischenbehälters speist, der einen durch eine ventilgesteuerte Rücklaufleitung mit dem Druckbehälter verbundenen Sammelraum für die Flüssigkeit bildet und an den Kondensator für den Dampf des Arbeitsmittels angeschlossen ist. Als Flüssigkeitsturbine wird vorzugsweise eine Impulsturbine, z.B. eine Pelton- oder Turgoturbine, eingesetzt.

In der DE 10 2008 064 252 A1 ist eine Wärmekraftmaschine beschrieben, die bei zufriedenstellenden Wirkungsgraden im Niedertemperatur-Bereich die Nutzung von Thermalwasser oder Solarthermie zur Verstromung gestattet. Auch hier findet ein Verdampfungs-Kondensations-Zyklus statt, wobei eine einen Stromgenerator antreibende Turbine über einen Injektor angetrieben wird.

Eine in der DE 103 15 746 B3 beschriebene Wärmekraftmaschine zur Umwandlung von thermischer Energie in mechanische Energie enthält zumindest eine Dampferzeugungsvorrichtung zum zumindest teilweisen Verdampfen eines ersten flüssigen Arbeitsmediums mittels thermischer Energie, zumindest einen mittels des verdampften Arbeitsmediums zur Erzeugung vom mechanischer Energie antreibbaren und relativ zu zumindest einem Stator um eine erste Drehachse drehbaren Rotor und zumindest eine Kondensationsvorrichtung zur Kondensation des verdampften ersten Arbeitsmediums nach Antreiben des Rotors, wobei der Rotor den Stator im Wesentlichen vollständig umgibt und der Rotor die Dampferzeugungsvorrichtung und die Kondensationsvorrichtung im Wesentlichen vollständig umfasst. Es handelt sich hier um ein in seinem konstruktiven Aufbau sehr komplexes System.

Der Erfindung liegt die Aufgabe zugrunde, eine gegenüber dem Stand der Technik mit einem geringeren Wärmeeinsatz und mit hohem Wirkungsgrad effizient arbeitende Wärmekraftmaschine zu schaffen.

Zur Lösung dieser Aufgabe dienen in konstruktiver Hinsicht die Merkmale gemäß Patentanspruch 1 und in verfahrenstechnischer Hinsicht die Merkmale gemäß Anspruch 7. Die erfindungsgemäße Wärmekraftmaschine zeichnet sich insbesondere gegenüber der Wärmekraftmaschine gemäß EP 2 096 305 bedingt durch die Verwendung einer Tesla-Turbine und den bevorzugten Einsatz des Kältemittels R 134a (C₂H₂F₄) gegenüber dem Stand der Technik insbesondere durch einen verbesserten Wirkungsgrad aus.

Obwohl Wärmekraftmaschinen, bei denen Wärmeenergie beliebiger Herkunft zur Erzeugung von Strom mittels eines Stromgenerators in großer Anzahl bekannt sind, wird durch die erfindungsgemäße Einbeziehung einer bereits im Jahre 1913 beschriebenen Tesla-Turbine und die bevorzugte Verwendung des Kältemittels R 134a (C₂H₂F₄) in Verbindung mit einer in der EP 2 096 305 beschriebenen Wärmekraftmaschine eine Lösung für eine Wärmekraftmaschine gefunden worden, die gegenüber den bekannten Wärmekraftmaschinen mit verbesserter Effizienz bzw. verbesserten Wirkungsgrad arbeitet.

Bei der in der Zeichnung dargestellten Wärmekraftanlage bzw. Wärmekraftmaschine wird den Gesetzmäßigkeiten sowohl des Carnot-Kreisprozesses als auch des Joule-Thomson-Effektes gefolgt.

Die Anlage enthält einen an eine Wärmequelle angeschlossenen Wärmespeicher 2. Bei dieser Wärmequelle handelt es sich zum Beispiel um einen Solarkollektor 1 oder um ein System zur Wärmegewinnung aus regenerativen Energiequellen. Die Wärmequelle kann auch eine Abwärmequelle zur Abwärmenutzung der Abwärme von z.B. industriellen Prozessen sein. Der Wärmespeicher 2 ist ein PCM-Latentwärmespeicher auf Salz- oder Paraffinbasis, der eine Phasenumwandlung z.B. fest/flüssig eines Phasenwechselmaterials (phase change material = PCM) ausnutzt und hierdurch große Wärmemengen in einem engen Temperaturbereich speichern kann.

Der Wärmespeicher 2 dient zur Wärmeversorgung eines Verdampfers 4. Dieser Verdampfer 4 dient zum Verdampfen eines mittels der Pumpe 5 durch die Leitung 5.1 zugeführten flüssigen Kältemittels, das anschließend im gasförmigen Zustand durch eine Leitung 4.1 einer Tesla-Turbine 6 zugeführt wird, die zum Antrieb eines Stromgenerators 7 und ggf. auch der Pumpe 5 dient. In der Tesla-Turbine expandiert das gasförmige Kältemittel, wodurch ein Temperaturabfall in Richtung zur dampfförmigen Phase erfolgt. Das die Tesla-Turbine durch die Leitung 6.1 verlassende gas-/dampfförmige Kältemittel wird in dem Kondensator 8 verflüssigt, um anschließend durch die Leitung 8.1 strömend wieder mittels der Pumpe 5 dem Verdampfer 4 zugeführt zu werden.

Als Kältemittel wird das Kältemittel R134a (C₂H₂F₄) verwendet.

Die für die Kühlung bzw. Kondensation des Kältemittels im Kondensator notwendige Energie kann der Umgebung, z. B. dem Erdreich, entnommen werden.

In die Leitung 5.1 ist eine Rückschlagklappe 9 eingefügt. In die Leitung 4.1 können vorzugsweise eine Drossel 10 sowie eine druck- und/oder temperaturgesteuerte Absperreinrichtung 11 eingesetzt sein, die erst dann geöffnet wird, wenn beim Anlaufen bzw. Starten der Wärmekraftmaschine der für den Betrieb der Tesla-Turbine erforderliche gasförmige Zustand des Kältemittels erreicht ist. Mittels der Drossel 10 wird der Gas-Volumenstrom zur Turbine 6 optimiert, um die Effizienz der Tesla-Turbine 6 zu steigern und die Expansion in der Tesla-Turbine zu optimieren.

In der Tesla-Turbine 6 expandiert das gasförmige Kältemittel bzw. Arbeitsmedium quasi - adiabatisch. Dabei leistet es Arbeit und aufgrund des Joule-Thomson-Effektes auch Arbeit gegen die intermolekularen Kräfte, wodurch es sich im Extremfall bis zur Verflüssigung abkühlen kann. Infolge des Joule-Thomson-Effektes verringert sich die aufzubringende Kühlleistung, die anschließend zur Verflüssigung des Kältemittels erbracht werden muss, um dieses wieder in flüssigem Zustand dem Verdampfer 4 zuzuführen.

Ein Vorteil der Tesla-Turbine ist es, dass der Wirkungsgrad von den Adhäsionskräften des Dampfes oder Gases des im Kreislauf geführten Kältemittels abhängig ist. Diese Möglichkeit ist besonders bei mit Öl angereichertem Kältemittel gegeben, wobei der Ölanteil erfindungsgemäß gleichzeitig auch zum Schmieren der Lager der Tesla-Turbine und/oder des Stromgenerators 7 beitragen kann.

In die Kreisläufe zwischen dem Latentwärmespeicher 2 und dem Solarkollektor 1 einerseits und dem Verdampfer 4 andererseits sind Umlaufpumpen 3 integriert.

## Patentansprüche

1. Wärmekraftmaschine zur Umwandlung von Wärmeenergie in einer Turbine (6) in mechanische Energie zum Antrieb eines Stromgenerators (7), enthaltend:
- einen der Turbine (6) vorgeschalteten, als Wärmetauscher ausgebildeten Verdampfer (4) zur Überführung eines Kältemittels aus der Flüssigphase in die Gasphase,
- einen den Verdampfer (4) mit Wärmeenergie versorgenden Latentwärmespeicher (2),
- eine an den Latentwärmespeicher (2) angeschlossene Wärmequelle, deren Arbeitsmedium zur Wärmeenergieversorgung des Latentwärmespeichers (2) diesem im Kreislauf zugeführt wird,
- einen der Turbine (6) nachgeschalteten Kondensator (8) zur Verflüssigung des die Turbine (6) verlassenden Kältemittels, und
- eine zwischen dem Kondensator (8) und dem Verdampfer (4) befindliche Pumpe (5) zur Förderung des den Kondensator (8) verlassenden flüssigen Kältemittels in den Verdampfer (4),
**dadurch gekennzeichnet, dass** die Turbine (6) eine Tesla-Turbine ist, und dass das Kältemittel das Kältemittel R134a (C₂H₂F₄) ist.

2. Wärmekraftmaschine nach Anspruch 1, **dadurch gekennzeichnet, dass** die Pumpe (5) von der Welle der Tesla-Turbine (6) antreibbar ist.

3. Wärmekraftmaschine nach Anspruch 1 oder 2, **dadurch gekennzeichnet, dass** in die Leitung (5.1) zwischen der Pumpe (5) und dem Verdampfer (4) eine Rückschlagklappe (9) eingefügt ist.

4. Wärmekraftmaschine nach einem der Ansprüche 1 bis 3, **dadurch gekennzeichnet, dass** in die den Verdampfer (4) mit der Tesla-Turbine (6) verbindende Leitung (1) eine Drossel (10) eingefügt ist.

5. Wärmekraftmaschine nach einem der Ansprüche 1 bis 4, **dadurch gekennzeichnet, dass** in die den Verdampfer (4) mit der Tesla-Turbine (6) verbindende Leitung eine druck- und/oder temperaturgesteuerte Absperreinrichtung (11) eingesetzt ist, die erst dann geöffnet wird, wenn beim Anlaufen bzw. Starten der Wärmekraftmaschine der für den Betrieb der Tesla-Turbine (6) erforderliche gasförmige Zustand des Kältemittels erreicht ist.

6. Wärmekraftmaschine nach einem der Ansprüche 2 bis 5, **dadurch gekennzeichnet, dass** das Kältemittel R134a mit Öl angereichert ist.

7. Verfahren zum Betrieb einer Wärmekraftmaschine zur Umwandlung von Wärmeenergie in einer Turbine in mechanische Energie zum Antrieb eines Stromgenerators, bestehend aus folgenden Schritten:
- in einem der Turbine (6) vorgeschalteten, als Wärmetauscher ausgebildeten Verdampfer (4) wird ein Kältemittel aus der Flüssigphase in die Gasphase überführt,
- der Verdampfer (4) wird mit Wärmeenergie aus einem Latentwärmespeicher (2) versorgt,
- dem Latentwärmespeicher (2) wird zur Wärmeenergieversorgung ein von einer Wärmequelle erwärmtes Arbeitsmedium im Kreislauf zugeführt,
- das die Turbine (6) verlassende Kältemittel wird in einem Kondensator (8) verflüssigt, und
- dieses verflüssigte Kältemittel wird dem Verdampfer (4) mittels einer Pumpe (5) zugeführt,
**dadurch gekennzeichnet, dass** man als Turbine eine Tesla-Turbine (6) verwendet und als Kältemittel das Kältemittel R134a (C₂H₂F₄) benutzt.

8. Verfahren nach Anspruch 7, **dadurch gekennzeichnet, dass** die Pumpe (5) von der Welle der Tesla-Turbine (6) angetrieben wird.

9. Verfahren nach Anspruch 7 oder 8, **dadurch gekennzeichnet, dass** man in die zwischen der Pumpe (5) und dem Verdampfer (4) befindliche Leitung eine Rückschlagklappe (9) einfügt.

10. Verfahren nach einem der Ansprüche 7 bis 9, **dadurch gekennzeichnet, dass** man in die den Verdampfer (4) mit der Tesla-Turbine (6) verbindende Leitung (1) eine Drossel (10) einfügt.

11. Verfahren nach einem der Ansprüche 7 bis 10, **dadurch gekennzeichnet, dass** man in die den Verdampfer (4) mit der Tesla-Turbine (6) verbindende Leitung eine druck- und/oder temperaturgesteuerte Absperreinrichtung (11) einsetzt, die erst dann geöffnet wird, wenn beim Anlaufen bzw. Starten der Wärmekraftmaschine der für den Betrieb der Tesla-Turbine (6) erforderliche gasförmige Zustand des Kältemittels R134a erreicht ist.

12. Verfahren nach einem der Ansprüche 7 bis 11, **dadurch gekennzeichnet, dass** man das Kältemittel R 134a mit Öl anreichert.

13. Verfahren nach einem der Ansprüche 7 bis 12, **dadurch gekennzeichnet, dass** man als Latentwärmespeicher ein PCM-Latentwärmespeicher, vorzugsweise auf Salz- oder Paraffinbasis benutzt.

## Claims

1. Thermal engine for converting heat energy into mechanical energy in a turbine for driving a current generator containing:
- a vaporizer (4) designed as a heat exchanger, which is situated ahead of the turbine (6) for converting a refrigerant from the liquid phase into the gaseous phase,
- a latent heat-storage unit (2) for supplying heat energy to the vaporizer,
- a source of heat which is connected to the latent heat-storage unit, the working medium of which is conducted in circuit into the latent heat-storage unit for heat energy supply purposes
- a condenser (8) which is situated downstream of the turbine (6) for condensing the refrigerant emitted from the turbine (6) and
- a pump (5) being connected between the condenser (8) and the vaporizer (4), for transferring the liquid refrigerant from the condenser (8) to the vaporizer (4)
**characterized in that** the turbine (6) is a Tesla-turbine and the refrigerant is the refrigerant R 134 a (C₂H₂F₄)

2. Thermal engine according to claim 1 **characterized in that** the pump (5) is drivable by the shaft the Tesla-turbine (6).

3. Thermal engine according to claim 1 or 2 **characterized in that** a non-return valve (9) is inserted into the conduit (5.1) between the pump (5) and the vaporizer (4).

4. Thermal engine according to one of the claims 1 to 3 **characterized in that** a restrictor (10) is inserted into the conduit (1) connecting the vaporizer (4)with the Tesla-turbine.

5. Thermal engine according to one of the claims 1 to 4 **characterized in that** a pressure and/or temperature controlled shut-off unit (11) is inserted into the conduit connecting the vaporizer (4) with the Tesla-turbine (6) which shut-off unit is opened, only, if during the starting of the thermal engine the gaseous status of the refrigerant is reached which is necessary for operating the Tesla-turbine (6).

6. Thermal engine according to one of the claims 2 to 5 **characterized in that** the refrigerant R 134a is enriched with oil.

7. Method for operating a thermal engine for converting heat energy into mechanical energy in a turbine for driving a current generator containing the following steps:
- a refrigerant is converted from the liquid phase into the gaseous phase in a vaporizer (4) designed as a heat exchanger, which is situated ahead of the turbine (6),
- the vaporizer (4) is supplied with heat energy which is derived from a latent heat-storage unit (2),
- a working medium which has been heated by a source of heat, is supplied in circuit to the latent heat-storage unit (2) for heat energy supply purposes,
- the refrigerant emitting from the turbine (6) is condensed in a condenser (8),
- the liquefied refrigerant is delivered to the vaporizer (4) by means of a pump (5)
**characterized in that** the turbine is a Tesla-turbine (6) and the refrigerant is the refrigerant R 134a (C₂H₂F₄).

8. Method according to claim 7, **characterized in that** the pump (5) is driven by the shaft of the Tesla-turbine (6).

9. Method according to claim 7 or 8, **characterized in that** a back-pressure flap (9) is arranged in the conduit between the pump (5) and the vaporizer (4).

10. Method according to one of the claims 7 to 9, **characterized in that** a restrictor (10) is arranged in the conduit (1) between the vaporizer (4) and the Tesla-turbine (6).

11. Method according to one of the claims 7 to 10, **characterized in that** a pressure and/or temperature controlled shut-off unit (11) is arranged in the conduit connecting the vaporizer (4) to the Tesla-turbine (6), which is opened only if during the starting of the thermal engine the gaseous status of the refrigerant is reached which is necessary for operating the Tesla-turbine (6).

12. Method according to one of the claims 7 to 11, **characterized in that** the refrigerant R 134a is enriched with oil.

13. Method according to one of the claims 7 to 12, **characterized in that** a PCM-latent heat-storage unit is used at latent heat-storage unit, which preferably is a salt or paraffin based unit.

## Revendications

1. Moteur thermique pour transformer d'énergie thermique dans une turbine (6) en énergie mécanique pour entraîner un générateur électrique (7), comprenant :
- un vaporisateur (4) en forme d'un échangeur de chaleur, qui est situé en amont de la turbine (6), pour transformer un agent frigorigène de la phase liquide en la phase gazeuse
- un accumulateur thermique latent (2) [de changement d'état] pour alimenter le vaporisateur (4) en énergie thermique,
- une source de chaleur qui est raccordée à l'accumulateur thermique latent (2), la substance active de laquelle est conduit directement à l'accumulateur thermique latent (2) pour alimenter celui en mouvement circulaire en énergie thermique,
- un condensateur (8) qui est disposé en arrière de la turbine (6) pour condenser l'agent frigorigène quittant la turbine (6) et
- une pompe (5) arrangée entre le condensateur (8) et le vaporisateur pour alimenter l'agent frigorigène liquide quittant du condensateur au vaporisateur (4)
**caractérisé en ce que** la turbine (6) est une turbine de Tesla et que l'agent frigorigène est l'agent frigorigène R 134a (C₂H₂F₄).

2. Moteur thermique selon la revendication 1 **caractérisé en ce que** la pompe (5) et actionnée par l'arbre de la turbine de Tesla (6).

3. Moteur thermique selon la revendication 1 ou 2 **caractérisé en ce qu'**une soupape de retenue (9) est intercalée dans le conduit (5.1) entre la pompe (6) et le vaporisateur (4).

4. Moteur thermique selon l'une quelconque des revendications 1 à 3 **caractérisé en ce qu'**un étrangleur (10) et intercalé dans le conduit (5.1), qui connecte le vaporisateur (4) avec la turbine de Tesla (6).

5. Moteur thermique selon l'une quelconque des revendications 1 à 4 **caractérisé en ce qu'**un organe d'arrêt est inséré dans le conduit, qui connecte le vaporisateur (4) avec la turbine de Tesla (6) et qui est ouvert si, pendant la mise en marche ou le démarrage, respectivement, le moteur thermique obtient l'état gazeux de l'agent frigorigène, qui est indispensable pour l'opération de la turbine de Tesla.

6. Moteur thermique selon l'une quelconque des revendications 2 à 5 **caractérisé en ce que** l'agent frigorigène R134a est enrichi d'huile.

7. Procédé pour opérer un moteur thermique pour transformer d'énergie thermique dans une turbine en énergie mécanique, pour entrainer un générateur électrique, comprenant les pas suivants :
- un agent frigorigène est transformé de phase de la phase liquide en la phase gazeuse dans un vaporisateur en forme d'un échangeur de chaleur, qui est situé en amont de la turbine,
- le vaporisateur est alimenté en énergie thermique d'un accumulateur thermique latent (2),
- une substance active, qui est chauffée d'une source de chaleur, est alimentée en mouvement circuler aire dans l'accumulateur thermique latent (2),
- l'agent frigorigène quittant la turbine (6) est liquéfié dans un condensateur (8) et
- et l'agent frigorigène liquide est alimenté au vaporisateur (4) au moyen d'une pompe (5),
**caractérisé en ce que** comme turbine (6) une turbine de Tesla est utilisée et que comme agent frigorigène l'agent frigorigène R134a(C₂H₄F₄) est utilisée.

8. Procédé selon la revendication 7, **caractérisé en ce que** la pompe (5) et actionnée par l'arbre de la turbine de Tesla.

9. Procédé selon les revendications 7 ou 8, **caractérisé en ce que** l'on intercale une soupape de retenue (9) dans le conduit entre la pompe (5) et le vaporisateur (4).

10. Procédé selon l'une quelconque des revendications 7 à 9, **caractérisé en ce que** l'on intercale un étrangleur (10) dans le conduit entre le vaporisateur (4) et la turbine de Tesla (6).

11. Procédé selon l'une quelconque des revendications 7 à 10, **caractérisé en ce que** l'on insère dans le conduit, qui connecte le vaporisateur (4) avec la turbine de Tesla (6), un organe d'arrêt (11) commandé par pression ou par température qui ouvre si, pendant la mise en marche ou le démarrage respectivement, le moteur thermique obtient l'état gazeux indispensable pour l'agent frigorigène, R134a.

12. Procédé selon l'une quelconque des revendications 7 à 11, **caractérisé en ce que** l'on en riche l'agent frigorigène est en riche de l'huile.

13. Procédé selon l'une quelconque des revendications 7 à 12, **caractérisé en ce qu'**un PCM-accumulateur thermique latent est utilisé comme accumulateur thermique latent (2) de préférence à base de sel ou paraffine.
